# EUROPÄISCHE PATENTSCHRIFT

(11) **EP 3 296 442 B1**
(45) Veröffentlichungstag und Bekanntmachung des Hinweises auf die Patenterteilung: **28.11.2018**
(21) Anmeldenummer: 16002022.8
(22) Anmeldetag: 16.09.2016
(51) Int. Cl.: D06F 33/02, D06F 39/00, D06F 39/02, D06F 35/00, A47L 15/46, G05B 11/01

(54) **HAUSHALTSGERÄT ZUM REINIGEN EINER BELADUNG UND VERFAHREN ZUM REINIGEN EINER BELADUNG IN EINEM BEHANDLUNGSRAUM EINES HAUSHALTSGERÄTS**
HOUSEHOLD APPLIANCE FOR CLEANING A LOAD AND METHOD FOR CLEANING A LOAD IN AN OPERATIONAL AREA OF A HOUSEHOLD APPLIANCE
APPAREIL MENAGER DESTINE A NETTOYER UN CHARGEMENT ET PROCEDE DE NETTOYAGE D'UN CHARGEMENT DANS UN ESPACE DE TRAITEMENT D'UN APPAREIL MENAGER

(43) Veröffentlichungstag der Anmeldung: 21.03.2018
(73) Patentinhaber: Diehl AKO Stiftung & Co. KG, 88239 Wangen (DE)
(72) Erfinder: Zatorski, Leszek, 53-441 Wroclaw (PL)
(74) Vertreter: Diehl Patentabteilung

(56) Entgegenhaltungen:
- WO-A1-2012/084663
- DE-A1- 19 741 023
- DE-A1-102012 105 340
- DE-B4-102004 039 435

## Beschreibung

Die vorliegende Erfindung betrifft ein Haushaltsgerät zum Reinigen einer Beladung wie zum Beispiel eine Spülmaschine oder ein Wäschebehandlungsgerät, sowie ein Verfahren zum Reinigen einer Beladung in einem Behandlungsraum eines Haushaltsgeräts.

Bei Haushaltsgeräten zum Reinigen einer Beladung wie zum Beispiel Spülmaschinen oder Wäschebehandlungsgeräten (Waschmaschinen, Wäschetrockner, etc.) ist es bekannt, Programmabläufe automatisch an verschiedene Paramater anzupassen. So sind zum Beispiel Waschmaschinen bekannt, die ein Gewicht einer zu reinigenden Wäscheladung erfassen und einen Waschprogrammablauf und/oder eine Waschmittelmenge an die erfasste Beladungsmenge automatisch anpassen (vgl. z.B. DE 197 41 023 A1). Auch für Spülmaschinen ist es bekannt, die Beladungsmenge und den Verschmutzungsgrad der Beladung zu erfassen, um einen Spülprogrammablauf entsprechend anzupassen (vgl. z.B. DE 100 48 081 A1).

Es ist bei solchen Haushaltsgeräten ferner bekannt, Reinigungsprogramme automatisch zeitversetzt zu starten. Dies kann zum Beispiel geschehen, um das Reinigungsprogramm zu einem Zeitpunkt ablaufen zu lassen, zu dem die Energiekosten aufgrund zum Beispiel niedrigerer Energiepreise geringer sind (vgl. z.B. DE 10 2012 105 340 A1) oder zu dem Betriebsgeräusche des Haushaltsgeräts weniger störend sind (vgl. z.B. DE 10 2004 039 435 B4).

Der Erfindung liegt die Aufgabe zugrunde, ein verbessertes Haushaltsgerät und ein verbessertes Verfahren zum Reinigen einer Beladung mit einem automatischen Programmstart bereitzustellen.

Diese Aufgabe wird gelöst durch die Lehre der unabhängigen Ansprüche. Besonders bevorzugte Ausgestaltungen und Weiterbildungen der Erfindung sind Gegenstand der abhängigen Ansprüche.

Das Haushaltsgerät zum Reinigen einer Beladung weist einen Behandlungsraum zum Aufnehmen einer zu reinigenden Beladung, eine Beladungserfassungsvorrichtung zum Erfassen einer Beladungsmenge in dem Behandlungsraum und eine Zeiterfassungsvorrichtung zum Erfassen eines Zeitwerts auf. Erfindungsgemäß weist das Haushaltsgerät zudem eine Steuerung auf, die ausgestaltet ist, um ein Reinigungsprogramm automatisch zu starten, wenn (i) die durch die Beladungserfassungsvorrichtung erfasste Beladungsmenge einen vorbestimmten Beladungsgrenzwert überschreitet und (ii) der durch die Zeiterfassungsvorrichtung erfasste Zeitwert einen vorbestimmten Zeitgrenzwert überschreitet.

Bei dem erfindungsgemäßen Haushaltsgerät kann ein Starten eines Reinigungsprogramms zeitversetzt erfolgen, wird das Reinigungsprogramm aber nur gestartet, wenn eine Mindestbeladungsmenge erreicht ist. Hierdurch kann vermieden werden, dass das Haushaltsgerät Energie, Wasser, Reinigungsmittel, etc. bei nicht ausreichender Beladung verschwendet.

Bei dem Haushaltsgerät zum Reinigen einer Beladung handelt es sich vorzugsweise um eine Spülmaschine, ein Wäschebehandlungsgerät (Waschmaschine, Wäschetrockner, etc.) oder dergleichen.

Bei dem zu erfassenden Zeitwert und dem vorbestimmten Zeitgrenzwert handelt es sich vorzugsweise um eine Zeitdauer oder eine Uhrzeit. Bei der Zeiterfassungsvorrichtung handelt es sich vorzugsweise um einen Timer, der bevorzugt in die Steuerung integriert ist.

Bei der zu erfassenden Beladungsmenge und dem vorbestimmten Beladungsgrenzwert handelt es sich vorzugsweise um ein Beladungsgewicht, ein Beladungsvolumen oder dergleichen. Die Beladungsmengenerfassungsvorrichtung weist dementsprechend vorzugsweise einen Gewichtssensor, einen Beladungsdetektor (z.B. optisches Bilderfassungssystem, Sensorsysteme mit elektromagnetischen Wellen, Sensorsysteme mit Schallwellen, etc.).

In einer vorteilhaften Ausgestaltung der Erfindung weist das Haushaltsgerät ferner eine Eingabevorrichtung zum Eingeben des vorbestimmten Zeitgrenzwerts durch einen Benutzer auf. Diese Eingabevorrichtung kann vorzugsweise das Bedienfeld des Haushaltsgeräts sein oder in dieses integriert sein. In anderen Ausführungsformen der Erfindung kann der vorbestimmte Zeitgrenzwert auch fest vorgegeben und zum Beispiel in einem Speicher der Steuerung hinterlegt sein.

In einer vorteilhaften Ausgestaltung der Erfindung weist das Haushaltsgerät ferner eine Eingabevorrichtung zum Eingeben des vorbestimmten Beladungsgrenzwerts durch einen Benutzer auf. Diese Eingabevorrichtung kann vorzugsweise das Bedienfeld des Haushaltsgeräts sein oder in dieses integriert sein. Vorzugsweise ist die Eingabevorrichtung zum Eingeben des vorbestimmten Zeitgrenzwerts auch zum Eingeben des vorbestimmten Beladungsgrenzwerts ausgebildet. In anderen Ausführungsformen der Erfindung kann der vorbestimmte Beladungsgrenzwert auch fest vorgegeben und zum Beispiel in einem Speicher der Steuerung hinterlegt sein.

In einer weiteren vorteilhaften Ausgestaltung der Erfindung weist das Haushaltsgerät ferner eine Reinigungsmittelerfassungsvorrichtung zum Erfassen einer zur Verfügung stehenden Reinigungsmittelmenge auf. Die Steuerung des Haushaltsgeräts ist dann bevorzugt ferner ausgestaltet, um das Reinigungsprogramm nur dann automatisch zu starten, wenn (iii) die durch die Reinigungsmittelerfassungsvorrichtung erfasste Reinigungsmittelmenge einen vorbestimmten Reinigungsmittelgrenzwert überschreitet.

In einer weiteren vorteilhaften Ausgestaltung der Erfindung weist das Haushaltsgerät ferner eine Türschließautomatik zum automatischen Schließen einer Tür zum Behandlungsraum auf. Die Steuerung des Haushaltsgeräts ist dann bevorzugt ferner ausgestaltet, um diese Türschließautomatik zum Schließen der Tür anzusteuern, bevor sie das Reinigungsprogramm startet.

In einer noch weiteren vorteilhaften Ausgestaltung der Erfindung weist das Haushaltsgerät ferner eine Energiekostenerfassungsvorrichtung zum Erfassen von tatsächlichen Energiekosten auf. Die Steuerung des Haushaltsgeräts ist dann bevorzugt ferner ausgestaltet, um das Reinigungsprogramm nur dann automatisch zu starten, wenn (iv) die durch die Energiekostenerfassungsvorrichtung erfassten Energiekosten einen vorbestimmten Energiekostengrenzwert unterschreiten. Bei den tatsächlichen Energiekosten handelt es sich zum Beispiel um Energiepreise in unterschiedlichen Tarifen (z.B. Tagtarif, Nachttarif, Wochenendtarif, etc.).

In einer noch weiteren vorteilhaften Ausgestaltung der Erfindung weist das Haushaltsgerät ferner eine Anzeigevorrichtung zum Anzeigen wenigstens einer Information auf, die ausgewählt ist aus dem vorbestimmten Beladungsgrenzwert, der erfassten Beladungsmenge, einem Unterschied zwischen der erfassten Beladungsmenge und dem vorbestimmten Beladungsgrenzwert (z.B. Differenz, Quotient), dem vorbestimmten Zeitgrenzwert, dem erfassten Zeitwert und einem Unterschied zwischen dem erfassten Zeitwert und dem vorbestimmten Zeitgrenzwert (z.B. Differenz, Quotient). Diese Anzeigevorrichtung kann vorzugsweise das Bedienfeld des Haushaltsgeräts sein oder in dieses integriert sein. Diese Anzeigevorrichtung ist vorzugsweise mit der Eingabevorrichtung kombiniert. Zusätzlich kann die Anzeigevorrichtung vorzugsweise auch Informationen bzgl. der Energiekosten und des Schließzustandes der Tür zum Behandlungsraum anzeigen.

Das Verfahren zum Reinigen einer Beladung in einem Behandlungsraum eines Haushaltsgeräts weist die Schritte des Erfassens einer Beladungsmenge in dem Behandlungsraum und des Erfassens eines Zeitwerts auf. Das Reinigungsprogramm wird nur dann automatische gestartet, wenn (i) die erfasste Beladungsmenge einen vorbestimmten Beladungsgrenzwert überschreitet und (ii) der erfasste Zeitwert einen vorbestimmten Zeitgrenzwert überschreitet.

Besondere Vorteile, Begriffsdefinitionen, bevorzugte Ausgestaltungen entsprechen jenen aus der obigen Beschreibung des erfindungsgemäßen Haushaltsgeräts und werden daher an dieser Stelle nicht wiederholt.

Vorzugsweise weist das Verfahren ferner einen Schritt des Eingebens des vorbestimmten Beladungsgrenzwerts und/oder des vorbestimmten Zeitgrenzwerts durch einen Benutzer auf.

In einer vorteilhaften Ausgestaltung der Erfindung wird ferner eine zur Verfügung stehende Reinigungsmittelmenge erfasst. In diesem Fall wird das Reinigungsprogramm bevorzugt nur dann automatisch gestartet, wenn (iii) die erfasste Reinigungsmittelmenge einen vorbestimmten Reinigungsmittelgrenzwert überschreitet.

In einer vorteilhaften Ausgestaltung der Erfindung weist das Haushaltsgerät ferner eine Türschließautomatik zum automatischen Schließen einer Tür zum Behandlungsraum auf. In diesem Fall wird die Türschließautomatik bevorzugt zum Schließen der Tür angesteuert, bevor das Reinigungsprogramm gestartet wird.

In einer vorteilhaften Ausgestaltung der Erfindung wird ferner einem Benutzer wenigstens eine Information angezeigt, die ausgewählt ist aus dem vorbestimmten Beladungsgrenzwert, der erfassten Beladungsmenge, einem Unterschied zwischen der erfassten Beladungsmenge und dem vorbestimmten Beladungsgrenzwert, dem vorbestimmten Zeitgrenzwert, dem erfassten Zeitwert, und einem Unterschied zwischen dem erfassten Zeitwert und dem vor-bestimmten Zeitgrenzwert.

In weiteren einer vorteilhaften Ausgestaltung der Erfindung werden ferner tatsächliche Energiekosten erfasst. In diesem Fall wird das Reinigungsprogramm bevorzugt nur dann automatisch gestartet, wenn (iv) die erfassten Energiekosten einen vorbestimmten Energiekostengrenzwert unterschreiten.

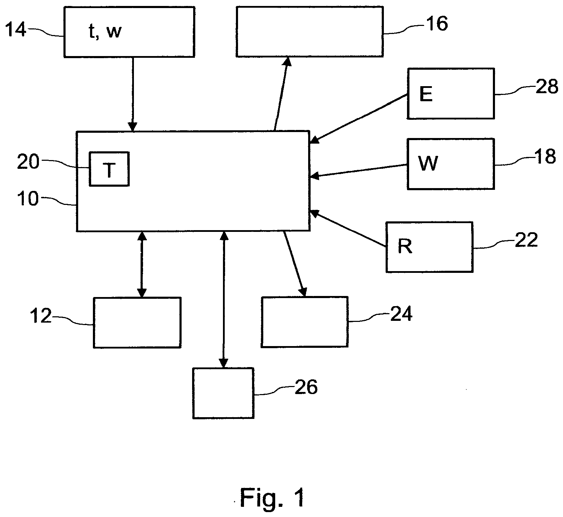

Obige sowie weitere Merkmale und Vorteile der Erfindung werden aus der nachfolgenden Beschreibung eines bevorzugten, nicht-einschränkenden Ausführungsbeispiels anhand der beiliegenden Zeichnung besser verständlich. Darin zeigt die einzige Figur 1 schematisch einen Aufbau eines Haushaltsgeräts gemäß einem Ausführungsbeispiel der Erfindung.

Bei dem Haushaltsgerät zum Reinigen einer Beladung handelt es sich beispielhaft um eine Spülmaschine oder eine Waschmaschine.

Das Haushaltsgerät weist eine Steuerung 10 auf, die wenigstens ein Aggregat 12 des Haushaltsgeräts ansteuert. Bei dem Aggregat 12 handelt es sich zum Beispiel um eine Wasserpumpe oder einen Antriebsmotor oder einer Wäschetrommel.

Die Steuerung 10 ist mit einer Eingabevorrichtung 14 und einer Anzeigevorrichtung 16 verbunden. Die Eingabevorrichtung 14 und die Anzeigevorrichtung 16 sind zum Beispiel miteinander kombiniert und in einer Bedienblende des Haushaltsgeräts integriert.

Die Steuerung 10 ist ferner mit einer Beladungserfassungsvorrichtung 18 verbunden, die eine zu reinigende Beladungsmenge W in einem Behandlungsraum des Haushaltsgeräts erfassen kann. Zu diesem Zweck weist die Beladungserfassungsvorrichtung 18 zum Beispiel einen Gewichtssensor zum Erfassen eines Gewichts der Beladung, einen Beladungsdetektor (z.B. optisches Bilderfassungssystem, Sensorsystem mit elektromagnetischen Wellen, Sensorsystem mit Schallwellen, etc.) zum Erfassen eines Volumens der Beladung im Behandlungsraum oder dergleichen auf.

Die Steuerung 10 enthält ferner einen Timer als Zeiterfassungsvorrichtung 20. Die Zeiterfassungsvorrichtung 20 dient dem Erfassen eines Zeitwerts T. Bei dem Zeitwert T handelt es sich zum Beispiel um eine Uhrzeit oder eine Zeitdauer.

Außerdem ist die Steuerung optional mit einer Reinigungsmittelerfassungsvorrichtung 22 und/oder einer Reinigungsmitteldosiervorrichtung 24 verbunden. Einerseits kann die Reinigungsmittelerfassungsvorrichtung 22 eine in einem Reinigungsmittelvorratsfach zur Verfügung stehende Reinigungsmittelmenge R erfassen, andererseits kann die Steuerung 10 die Reinigungsmitteldosiervorrichtung 26 zum dosierten Zuführen eines Reinigungsmittels ansteuern.

Ferner kann das Haushaltsgerät eine Türschließautomatik 26 aufweisen. Die Steuerung 10 kann die Türschließautomatik 26 ansteuern, um eine Tür zum Behandlungsraum des Haushaltsgeräts automatisch zu schließen. Andererseits kann die Türschließautomatik 26 der Steuerung 10 einen aktuellen Schließzustand (offen, geschlossen) dieser Tür mitteilen.

Schließlich ist die Steuerung optional mit einer Energiekostenerfassungsvorrichtung 28 zum Erfassen von tatsächlichen Energiekosten E verbunden. Bei den tatsächlichen Energiekosten E handelt es sich zum Beispiel um Energiepreise zu verschiedenen Tageszeiten (z.B. Tagtarif, Nachttarif, Wochenendtarif, etc.) des jeweiligen Energieanbieters (z.B. Strom, Wasser, etc.). Die Energiekostenerfassungsvorrichtung 28 kann zum Beispiel eine Verbindung mit dem Internet aufweisen, um die aktuellen Energiepreise von der Homepage des Energieanbieters abzurufen. Zusätzlich oder alternativ kann die Energiekostenerfassungsvorrichtung 28 einen Speicher zum Hinterlegen der Tarife des Energieanbieters aufweisen.

Ein zeitversetztes automatisches Starten eines Reinigungsprogramms erfolgt wie folgt.

Über die Eingabevorrichtung 14 kann ein Benutzer ein gewünschtes Reinigungsprogramm für die zu reinigende Beladung im Behandlungsraum des Haushaltsgeräts eingeben.

Der Benutzer kann über die Eingabevorrichtung 14 einen Zeitgrenzwert t (z.B. 20:00 Uhr, 2 Stunden, etc.), wann das Reinigungsprogramm frühestens gestartet werden soll, und einen Beladungsgrenzwert w (z.B. 4 kg, 50%), ab welcher Beladungsmenge das Reinigungsprogramm gestartet werden darf, eingeben. Die Eingabevorrichtung 14 teilt den eingegebenen Zeitgrenzwert t und den eingegebenen Beladungsgrenzwert w der Steuerung 10 mit. Diese Grenzwerte t, w können zum Beispiel einmalig eingegeben und in einem Speicher der Steuerung 10 abgelegt werden, oder für jeden Reinigungsvorgang neu eingegeben werden.

Die Beladungserfassungsvorrichtung 18 teilt der Steuerung 10 fortlaufend bzw. in regelmäßigen Zeitabständen die erfasste Beladungsmenge W mit.

Die Steuerung 10 startet das vom Benutzer ausgewählte Reinigungsprogramm nur dann, wenn die beiden folgenden Bedingungen erfüllt sind:
(i) die durch die Beladungserfassungsvorrichtung 18 erfasste Beladungsmenge W ist größer als der vorbestimmte, vom Benutzer eingegebene Beladungsgrenzwert w (W > w), und
(ii) der durch die Zeiterfassungsvorrichtung 20 ermittelte Zeitwert T ist größer als der vorbestimmte, vom Benutzer eingegebene Zeitgrenzwert t (T>t).

Bei einer erfindungsgemäßen Spülmaschine muss der Benutzer zum Beispiel nicht daran denken, diese am Abend einzuschalten. Er muss lediglich einmal eine gewünschte Startzeit am Abend eingeben. Falls jedoch im Laufe des Tages kaum schmutziges Geschirr in die Spülmaschine eingeräumt worden ist, so startet diese nicht, sondern wartet zum Beispiel bis zum nächsten Tag. D.h. bei einer zu geringen Beladung der Spülmaschine startet das Reinigungsprogramm trotz Erreichen der eingestellten Zeit nicht, sodass Wasser und elektrische Energie gespart werden können.

Der Beladungsgrenzwert w kann dabei vom Benutzer über die Eingabevorrichtung 14 variabel eingestellt werden. So kann das Beladungsgrenzgewicht zum Beispiel bei einer Beladung der Spülmaschine mit schweren Töpfen höher eingestellt werden als bei einer Beladung der Spülmaschine mit Gläsern oder Plastikgeschirr.

Falls vorhanden, steuert die Steuerung 10 die Türschließautomatik 26 vor dem Starten des Reinigungsprogramms an, die Tür zum Behandlungsraum zu schließen.

Falls vorhanden, teilt die Reinigungsmittelerfassungsvorrichtung 22 der Steuerung 10 die erfasste Reinigungsmittelmenge R mit. Die Steuerung 10 startet das vom Benutzer ausgewählte Reinigungsprogramm in diesem Fall nur dann, wenn zusätzlich zu den beiden obigen Bedingungen auch die folgende Bedingung erfüllt ist:
(iii) die durch die Reinigungsmittelerfassungsvorrichtung 22 erfasste Reinigungsmittelmenge R ist größer als ein vorbestimmter Reinigungsmittelgrenzwert.

Ferner teilt, falls vorhanden, die Energiekostenerfassungsvorrichtung 28 der Steuerung 10 die tatsächlichen Energiekosten E mit. Die Steuerung 10 startet das vom Benutzer ausgewählte Reinigungsprogramm in diesem Fall nur dann, wenn zusätzlich zu den obigen Bedingungen auch die folgende Bedingung erfüllt ist:
(iv) die durch die Energiekostenerfassungsvorrichtung 28 erfassten Energiekosten E sind niedriger als ein vorbestimmter Energiekostengrenzwert.

Über die Anzeigevorrichtung 16 können dem Benutzer insbesondere die folgenden Informationen angezeigt werden:
- ausgewähltes Reinigungsprogramm;
- Status des laufenden Reinigungsprogramms;
- der vorbestimmte/eingegebene Zeitgrenzwert t, der erfasste Zeitwert T und/oder ein Unterschied zwischen dem vorbestimmten Zeitgrenzwert t und dem erfassten Zeitwert T (z.B. als Differenz, z.B. "noch 1,5 Stunden");
- der vorbestimmte/eingegebene Beladungsgrenzwert w, die erfasste Beladungsmenge W und/oder ein Unterschied zwischen dem vorbestimmten Beladungsgrenzwert w und der erfassten Beladungsmenge W (z.B. als Quotient, z.B. "50% der Beladungsgrenze");
- die erfasste Reinigungsmittelmenge R, ein Unterschied zwischen dem vorbestimmten Reinigungsmittelgrenzwert und der erfassten Reinigungsmittelmenge R und/oder eine Statusbeurteilung (z.B. "ausreichend");
- die erfassten Energiekosten E und/oder eine Statusbeurteilung (z.B. "ausreichend günstig").

### BEZUGSZIFFERNLISTE

- 10: Steuerung
- 12: Aggregat
- 14: Eingabevorrichtung
- 16: Anzeigevorrichtung
- 18: Beladungserfassungsvorrichtung
- 20: Zeiterfassungsvorrichtung
- 22: Reinigungsmittelerfassungsvorrichtung
- 24: Reinigungsmitteldosiervorrichtung
- 26: Türschließautomatik
- 28: Energiekostenerfassungsvorrichtung

- E: erfasste Energiekosten
- R: erfasste Reinigungsmittelmenge
- t: Zeitgrenzwert
- T: erfasster Zeitwert
- w: Beladungsgrenzwert
- W: erfasste Beladungsmenge

## Patentansprüche

1. Haushaltsgerät zum Reinigen einer Beladung, aufweisend:
- einen Behandlungsraum zum Aufnehmen einer zu reinigenden Beladung;
- eine Beladungserfassungsvorrichtung (18) zum Erfassen einer Beladungsmenge (W) in dem Behandlungsraum ; und
- eine Steuerung (10),
**dadurch gekennzeichnet, dass** das Haushaltsgerät ferner
- eine Zeiterfassungsvorrichtung (20) zum Erfassen eines Zeitwerts (T) aufweist, und dass die Steuerung (10) ausgestaltet ist, um ein Reinigungsprogramm automatisch zu starten, wenn
(i) die durch die Beladungserfassungsvorrichtung (18) erfasste Beladungsmenge (W) einen vorbestimmten Beladungsgrenzwert (w) überschreitet, und
(ii) der durch die Zeiterfassungsvorrichtung (20) erfasste Zeitwert (T) einen vorbestimmten Zeitgrenzwert (t) überschreitet.

2. Haushaltsgerät nach Anspruch 1, welches ferner eine Eingabevorrichtung (14) zum Eingeben des vorbestimmten Zeitgrenzwerts (t) durch einen Benutzer aufweist.

3. Haushaltsgerät nach Anspruch 1 oder 2, welches ferner eine Eingabevorrichtung (14) zum Eingeben des vorbestimmten Beladungsgrenzwerts (w) durch einen Benutzer aufweist.

4. Haushaltsgerät nach einem der vorhergehenden Ansprüche, bei welchem
das Haushaltsgerät ferner eine Reinigungsmittelerfassungsvorrichtung (22) zum Erfassen einer zur Verfügung stehenden Reinigungsmittelmenge (R) aufweist; und die Steuerung (10) ferner ausgestaltet ist, um das Reinigungsprogramm nur dann automatisch zu starten, wenn
(iii) die durch die Reinigungsmittelerfassungsvorrichtung (22) erfasste Reinigungsmittelmenge (R) einen vorbestimmten Reinigungsmittelgrenzwert überschreitet.

5. Haushaltsgerät nach einem der vorhergehenden Ansprüche, bei welchem
das Haushaltsgerät ferner eine Türschließautomatik (26) zum automatischen Schließen einer Tür zum Behandlungsraum aufweist; und
die Steuerung (10) ferner ausgestaltet ist, um die Türschließautomatik (26) zum Schließen der Tür anzusteuern, bevor sie das Reinigungsprogramm startet.

6. Haushaltsgerät nach einem der vorhergehenden Ansprüche, bei welchem
das Haushaltsgerät ferner eine Anzeigevorrichtung (16) zum Anzeigen wenigstens einer Information aufweist, die ausgewählt ist aus dem vorbestimmten Beladungsgrenzwert (w), der erfassten Beladungsmenge (W), einem Unterschied zwischen der erfassten Beladungsmenge und dem vorbestimmten Beladungsgrenzwert (w-W, W/w), dem vorbestimmten Zeitgrenzwert (t), dem erfassten Zeitwert (T), und einem Unterschied zwischen dem erfassten Zeitwert und dem vorbestimmten Zeitgrenzwert (t-T, T/t).

7. Haushaltsgerät nach einem der vorhergehenden Ansprüche, bei welchem
das Haushaltsgerät ferner eine Energiekostenerfassungsvorrichtung (28) zum Erfassen von tatsächlichen Energiekosten (E) aufweist; und
die Steuerung (10) ferner ausgestaltet ist, um das Reinigungsprogramm nur dann automatisch zu starten, wenn
(iv) die durch die Energiekostenerfassungsvorrichtung (28) erfassten Energiekosten (E) einen vorbestimmten Energiekostengrenzwert unterschreiten.

8. Verfahren zum Reinigen einer Beladung in einem Behandlungsraum eines Haushaltsgeräts, mit den Schritten:
- Erfassen einer Beladungsmenge (W) in dem Behandlungsraum;
- Erfassen eines Zeitwerts (T); und
- automatisches Starten eines Reinigungsprogramms, wenn
(i) die erfasste Beladungsmenge (W) einen vorbestimmten Beladungsgrenzwert (w) überschreitet, und
(ii) der erfasste Zeitwert (T) einen vorbestimmten Zeitgrenzwert (t) überschreitet.

9. Verfahren nach Anspruch 8, ferner mit einem Schritt des Eingebens des vorbestimmten Beladungsgrenzwerts (w) und/oder des vorbestimmten Zeitgrenzwerts (t) durch einen Benutzer.

10. Verfahren nach Anspruch 8 oder 9, bei welchem
ferner eine zur Verfügung stehende Reinigungsmittelmenge (R) erfasst wird; und das Reinigungsprogramm nur dann automatisch gestartet wird, wenn
(iii) die erfasste Reinigungsmittelmenge (R) einen vorbestimmten Reinigungsmittelgrenzwert überschreitet.

11. Verfahren nach einem der Ansprüche 8 bis 10, bei welchem
das Haushaltsgerät ferner eine Türschließautomatik (26) zum automatischen Schließen einer Tür zum Behandlungsraum aufweist; und
die Türschließautomatik (26) zum Schließen der Tür angesteuert wird, bevor das Reinigungsprogramm gestartet wird.

12. Verfahren nach einem der Ansprüche 8 bis 11, bei welchem
einem Benutzer wenigstens eine Information angezeigt wird, die ausgewählt ist aus dem vorbestimmten Beladungsgrenzwert (w), der erfassten Beladungsmenge (W), einem Unterschied zwischen der erfassten Beladungsmenge und dem vorbestimmten Beladungsgrenzwert (w-W, W/w), dem vorbestimmten Zeitgrenzwert (t), dem erfassten Zeitwert (T), und einem Unterschied zwischen dem erfassten Zeitwert und dem vorbestimmten Zeitgrenzwert (t-T, T/t).

13. Verfahren nach einem der Ansprüche 8 bis 11, bei welchem
ferner tatsächliche Energiekosten (E) erfasst werden; und
das Reinigungsprogramm nur dann automatisch gestartet wird, wenn
(iv) die erfassten Energiekosten (E) einen vorbestimmten Energiekostengrenzwert unterschreiten.

## Claims

1. Domestic appliance for cleaning a load, having:
- a treatment space for accommodating a load to be cleaned;
- a load detecting device (18) for detecting a load quantity (W) in the treatment space; and
- a controller (10), - **characterized in that** the domestic appliance furthermore has
- a time detecting device (20) for detecting a time value (T), and **in that** the controller (10) is designed for automatically starting a cleaning programme when
(i) the load quantity (W) detected by the load detecting device (18) exceeds a predetermined load limit value (w), and
(ii) the time value (T) detected by the time detecting device (20) exceeds a predetermined time limit value (t).

2. Domestic appliance according to Claim 1, which also has an input device (14) for inputting the predetermined time limit value (t) by a user.

3. Domestic appliance according to Claim 1 or 2, which also has an input device (14) for inputting the predetermined load limit value (w) by a user.

4. Domestic appliance according to one of the preceding claims, in which
the domestic appliance also has a cleaning agent detecting device (22) for detecting an available cleaning agent quantity (R); and
the controller (10) is also designed to start the cleaning programme automatically only when
(iii) the cleaning agent quantity (R) detected by the cleaning agent detecting device (22) exceeds a predetermined cleaning agent limit value.

5. Domestic appliance according to one of the preceding claims, in which
the domestic appliance also has an automatic door closing system (26) for automatically closing a door to the treatment space; and
the controller (10) is also designed to activate the automatic door closing system (26) to close the door before it starts the cleaning programme.

6. Domestic appliance according to one of the preceding claims, in which
the domestic appliance also has a display device (16) for displaying at least one information item which is selected from the predetermined load limit value (w), the detected load quantity (W), a difference between the detected load quantity and the predetermined load limit value (w-W, W/w), the predetermined time limit value (t), the detected time value (T) and a difference between the detected time value and the predetermined time limit value (t-T, T/t).

7. Domestic appliance according to one of the preceding claims, in which
the domestic appliance also has an energy cost detecting device (28) for detecting actual energy costs (E); and
the controller (10) is also designed to start the cleaning programme automatically only when
(iv) the energy costs (E) detected by the energy cost detecting device (28) drop below a predetermined energy cost limit value.

8. Method for cleaning a load in a treatment space of a domestic appliance, comprising the steps:
- detecting a load quantity (W) in the treatment space;
- detecting a time value (T); and
- automatically starting a cleaning programme when
(i) the detected load quantity (W) exceeds a predetermined load limit value (w), and
(ii) the detected time value (T) exceeds a predetermined time limit value (t).

9. Method according to Claim 8, also having a step of inputting the predetermined load limit value (w) and/or the predetermined time limit value (t) by a user.

10. Method according to Claim 8 or 9, in which furthermore, an available quantity of cleaning agent (R) is detected; and
the cleaning programme is started automatically only when
(iii) the detected quantity of cleaning agent (R) exceeds a predetermined cleaning agent limit value.

11. Method according to one of Claims 8 to 10, in which the domestic appliance also has an automatic door closing system (26) for automatically closing a door to the treatment space; and
the automatic door closing system (26) is activated for closing the door before the cleaning programme is started.

12. Method according to one of Claims 8 to 11, in which at least one information item is displayed to a user which is selected from the predetermined load limit value (w), the detected load quantity (W), a difference between the detected load quantity and the predetermined load limit value (w-W, W/w), the predetermined time limit value (t), the detected time value (T), and a difference between the detected time value and the predetermined time limit value (t-T, T/t).

13. Method according to one of Claims 8 to 11, in which also actual energy costs (E) are detected; and
the cleaning programme is started automatically only when
(iv) the detected energy costs (E) drop below a predetermined energy cost limit value.

## Revendications

1. Appareil ménager destiné à nettoyer une charge, possédant :
- un espace de traitement destiné à accueillir une charge à nettoyer ;
- un dispositif de détection de charge (18) destiné à détecter un volume de charge (W) dans l'espace de traitement ; et
- une commande (10),
**caractérisé en ce que** l'appareil ménager possède en outre
- un dispositif de détection de temps (20) destiné à détecter une valeur de temps (T), et **en ce que** la commande (10) est configurée pour démarrer automatiquement un programme de nettoyage lorsque
(i) le volume de charge (W) détecté par le dispositif de détection de charge (18) dépasse une valeur limite de charge (w) prédéterminée, et
(ii) la valeur de temps (T) detectée par le dispositif de détection de temps (20) dépasse une valeur limite de temps (t) prédéterminée.

2. Appareil ménager selon la revendication 1, lequel possède en outre un dispositif de saisie (14) servant à la saisie par un utilisateur de la valeur limite de temps (t) prédéterminée.

3. Appareil ménager selon la revendication 1 ou 2, lequel possède en outre un dispositif de saisie (14) servant à la saisie par un utilisateur de la valeur limite de charge (w) prédéterminée.

4. Appareil ménager selon l'une des revendications précédentes, avec lequel l'appareil ménager possède en outre un dispositif de détection de détergent (22) destiné à détecter une quantité de détergent (R) disponible ; et la commande (10) est en outre configurée pour ne démarrer automatiquement le programme de nettoyage que lorsque
(iii) la quantité de détergent (R) détectée par le dispositif de détection de détergent (22) dépasse une valeur limite de détergent prédéterminée.

5. Appareil ménager selon l'une des revendications précédentes, avec lequel l'appareil ménager possède en outre un mécanisme de fermeture automatique de porte (26) servant à fermer automatiquement une porte vers l'espace de traitement ; et la commande (10) est en outre configurée pour commander le mécanisme de fermeture automatique de porte (26) en vue de fermer la porte avant qu'elle démarre le programme de nettoyage.

6. Appareil ménager selon l'une des revendications précédentes, avec lequel l'appareil ménager possède en outre un dispositif d'affichage (16) destiné à afficher au moins une information, laquelle est sélectionnée parmi la valeur limite de charge (w) prédéterminée, le volume de charge (W) détecté, une différence entre le volume de charge détecté et la valeur limite de charge prédéterminée (w-W, W/w), la valeur limite de temps (t) prédéterminée, la valeur de temps (T) détectée et une différence entre la valeur limite de temps prédéterminée et la valeur de temps détectée (t-T, T/t).

7. Appareil ménager selon l'une des revendications précédentes, avec lequel l'appareil ménager possède en outre un dispositif de détection des coûts énergétiques (28) destiné à détecter des coûts énergétiques (E) réels ; et la commande (10) est en outre configurée pour ne démarrer automatiquement le programme de nettoyage que lorsque
(iv) les coûts énergétiques (E) détectés par le dispositif de détection des coûts énergétiques (28) deviennent inférieurs à une valeur limite de coûts énergétiques prédéterminée.

8. Procédé pour nettoyer une charge dans un espace de traitement d'un appareil ménager, comprenant les étapes suivantes :
- détection d'un volume de charge (W) dans l'espace de traitement ;
- détection d'une valeur de temps (T) ; et
- démarrage automatique d'un programme de nettoyage lorsque
(i) le volume de charge (W) détecté dépasse une valeur limite de charge (w) prédéterminée, et
(ii) la valeur de temps (T) détectée dépasse une valeur limite de temps (t) prédéterminée.

9. Procédé selon la revendication 8, comprenant en outre une étape de saisie par un utilisateur de la valeur limite de charge (w) prédéterminée et/ou de la valeur limite de temps (t) prédéterminée.

10. Procédé selon la revendication 8 ou 9, selon lequel une quantité de détergent (R) disponible est détectée ; et le programme de nettoyage n'est démarré automatiquement que lorsque
(iii) la quantité de détergent (R) détectée dépasse une valeur limite de détergent prédéterminée.

11. Procédé selon l'une des revendications 8 à 10, selon lequel l'appareil ménager possède en outre un mécanisme de fermeture automatique de porte (26) servant à fermer automatiquement une porte vers l'espace de traitement ; et le mécanisme de fermeture automatique de porte (26) est commandé en vue de fermer la porte avant que le programme de nettoyage soit démarré.

12. Procédé selon l'une des revendications 8 à 11, selon lequel au moins une information est affichée à un utilisateur, laquelle est sélectionnée parmi la valeur limite de charge (w) prédéterminée, le volume de charge (W) détecté, une différence entre le volume de charge détecté et la valeur limite de charge prédéterminée (w-W, W/w), la valeur limite de temps (t) prédéterminée, la valeur de temps (T) détectée et une différence entre la valeur limite de temps prédéterminée et la valeur de temps détectée (t-T, T/t).

13. Procédé selon l'une des revendications 8 à 11, selon lequel des coûts énergétiques (E) réels sont détectés ; et le programme de nettoyage n'est démarré automatiquement que lorsque
(iv) les coûts énergétiques (E) détectés deviennent inférieurs à une valeur limite de coûts énergétiques prédéterminée.
